# EUROPÄISCHE PATENTANMELDUNG

(11) **EP 4 545 829 A1**
(43) Veröffentlichungstag der Anmeldung: **30.04.2025**
(21) Anmeldenummer: 24202775.3
(22) Anmeldetag: 26.09.2024
(51) Int. Cl.: F16K 27/02, F15B 13/08

(54) **PNEUMATIK-KONZEPT ENDSCHALTER-BOX**

(30) Priorität: 23.10.2023 DE 102023129019
(71) Anmelder: SISTO Armaturen S.A., 6468 Echternach (LU)
(72) Erfinder: SCHAAL, Andreas, 6468 Echternach (LU); HACKENBERGER, Bernd, 6468 Echternach (LU)
(74) Vertreter: Busch, Tobias

(57) **Zusammenfassung**

Die Erfindung betrifft eine Steuereinheit (28) für einen pneumatischen Stellantrieb eines Membranventils, wobei die Steuereinheit (28) ein Gehäusebauteil (13) umfasst, das einen Versorgungsanschluss (18), mindestens einen Arbeitsanschluss (19) und einen Entlüftungsanschluss (20) aufweist. In dem Gehäusebauteil (13) ist mindestens ein Magnetventil (17) angeordnet, wobei jedes Magnetventil eine Kombination folgender Anschlüsse umfasst: einen Arbeitsanschluss, einen Entlüftungsanschluss, einen Versorgungsanschluss. Die Anschlüsse (18, 19, 20) des Gehäusebauteils (13) stehen hierbei mit den Anschlüssen mindestens eines Magnetventils (17) in Verbindung. Die Steuereinheit (28) weist ein Modul auf, welches Kanäle zur Verbindung der Anschlüsse (18, 19, 20) umfasst.

## Beschreibung

Die Erfindung betrifft eine Steuereinheit für einen pneumatischen Stellantrieb eines Membranventils, wobei die Steuereinheit ein Gehäusebauteil umfasst, das einen Versorgungsanschluss, mindestens einen Arbeitsanschluss und einen Entlüftungsanschluss aufweist, und in dem Gehäusebauteil mindestens ein Magnetventil angeordnet ist, wobei jedes Magnetventil Kombinationen folgender Anschlüsse umfasst: einen Arbeitsanschluss, einen Entlüftungsanschluss, einen Versorgungsanschluss, wobei die Anschlüsse des Gehäusebauteils mit Anschlüssen mindestens eines Magnetventils in Verbindung stehen.

Eine Steuereinheit für einen pneumatischen Stellantrieb wird auch als Ventilsteuerkopf oder als Steuerkopf bezeichnet. Dabei handelt es sich, um ein elektronisches-pneumatisches Gerät, das zur Kontrolle und Regelung eines pneumatischen Stellantriebs zur Betätigung eines Membranventils verwendet wird.

Ein herkömmlicher Ventilsteuerkopf nach dem Stand der Technik ist in DE 10 2017 121 094 A1 beschrieben. Der beschriebene Ventilsteuerkopf, umfassend ein Gehäuse, eine Steuerelektronik, mindestens ein Steuerventil, Fluidanschlüsse, elektrische Anschlüsse, ein mit einem ersten Ventilschließteil starr gekoppeltes erstes Messobjekt und ein Positionsmesssystem, umfassend eine Messelektronik und einen ersten Positionssensor, wobei der erste Positionssensor eine Position des ersten Messobjekts erfassen kann, und wobei der Ventilsteuerkopf eine Befestigungseinrichtung aufweist, die ausgebildet ist, um einen zweiten Positionssensor anzukoppeln.

Der Ventilsteuerkopf ist in der Regel auf der Oberseite des Ventils angeordnet. Die Steuereinheit ist mit dem pneumatischen Stellantrieb und dem Membranventil über diverse Anschlüsse verbunden. Die Steuereinheit regelt dabei den Druck in den pneumatischen Leitungen, die den Stellantrieb versorgen. Hierbei kann die Steuerung des Drucks den Öffnungs- und Schließvorgang des Membranventils präzise steuern.

Die Steuereinheit empfängt üblicherweise die Steuersignale von externen Sensoren bzw. übergeordneten Regeleinheiten, die auch den Zustand des Ventils oder weitere relevante Parameter überwachen. Diese Signale dienen beispielsweise zur Erzielung eines gewünschten Ventilzustandes (geöffnet/geschlossen) und/oder zur Einstellung einer erwünschten Durchflussmenge.

Solche Steuereinheiten werden insbesondere in automatisierten oder ferngesteuerten Prozessen eingesetzt, wo eine präzise und zuverlässige Regelung von Membranventilen für die Steuerung von Flüssigkeits- und/oder Gasströmen erforderlich ist. Die genaue Ausführung und Funktionalität eines Ventilsteuerkopfs hängt dabei vom jeweiligen Ventiltyp und den spezifischen Anforderungen der Anwendung ab.

In der DE 10 336 065 A1 wird ein pneumatischer Ventilantrieb mit einem Gehäuse beschrieben, das einen Zylinder und an jedem axialen Ende des Zylinders eine Stirnwand aufweist, sowie mit einem mit einer axialen Spindel verbundenen Kolben, der in dem Zylinder axial geführt und an seinem Umfang gegen den Zylinder abgedichtet ist, und einer an einer der Stirnwände gebildeten ersten, einheitlichen Schnittstelle für einen Steuerkopf und einer an der anderen Stirnwand gebildeten zweiten, einheitlichen Schnittstelle für eine durch die Spindel zu betätigende Ventil-Armatur.

Die DE 69 715 022 T2 beschreibt eine Ventilbaugruppe mit einem druckbetätigbaren Ventil und einer Steuereinheit, die an einem dem Ventil entgegengesetzten Ende eines Stellglieds montiert wird. Die Steuereinheit umfasst einen Fluidkanal zur Bereitstellung eines Druckmediums mit einem ersten Ende, an dem ein Druckmedium bereitstellbar ist. Die Steuereinheit ist mit Koppelmitteln versehen, die mit Koppelmitteln am Stellglied verbindbar sind, um eine drehfeste Verbindung zwischen Steuereinheit und Stellglied zu gewährleisten. Ein zweites Ende des Fluidkanals steht in fluidischer Verbindung mit dem Stellglied. Ein normalerweise geschlossenes Ventilelement ist im Fluidkanal eingesetzt und hat ein Steuerelement, das an den beweglichen Teil des Ventils ankoppelbar ist und sich durch die Steuereinheit erstreckt. Ein äußeres Ende des Steuerelements ist mit dem Stellglied verbunden. Das Ventilelement wird gegen die Kraft von Federn oder gegen einen Differenzdruck geöffnet. Infolgedessen kann die Steuereinheit mittels einer Steckverbindung montiert und abgenommen werden, zur gleichen Zeit kann das Ventilelement automatisch geöffnet und beziehungsweise für schnellen und einfachen Service geschlossen werden.

Die EP 3 633 196 A1 betrifft die Erfassung und/oder Regelung der Stellung einer strömungsführenden Einheit. Bei der strömungsführenden Einheit kann es sich beispielsweise um eine Armatur handeln oder um eine Pumpe, insbesondere eine Membranpumpe.

In der EP 2 630 396 B1 wird eine elektrische Stellungsermittlungsvorrichtung zum Anbau an ein Ventil beschrieben. Die Vorrichtung umfasst ein Gehäuse mit einem darin beweglich angeordneten Stellmittel. Weiterhin umfasst die Vorrichtung eine am Gehäuse angeordnete Feder. Das Stellmittel wird mit einer Federkraft beaufschlagt. Im Gehäuseoberteil befindet sich eine Positionserfassungseinrichtung. Das Gehäuseoberteil weist weiterhin eine Trägerplatte mit einer Stellmitteleinhausung und einem Außengehäuse auf. Das Stellmittel und die Feder sind innerhalb der Stellmitteleinhausung angeordnet.

In der Regel weisen Steuereinheiten integrierte Magnetventile auf. Integrierte Magnetventile müssen durch Verbindungskanäle mit außenliegenden Pneumatikanschlüssen verbunden werden. Beispielsweise sind bei einem integrierten 3/2-Wegeventil drei Verbindungskanäle notwendig. Die Verbindungskanäle werden in der Regel von außen in einen Bereich der Steuereinheit, die aus Vollmaterial ausgebildet ist, gebohrt. Um eine komplexe Form eines Verbindungskanals zu erzeugen, werden meist verschiedene Bohrungen ausgeführt, deren Einbohrstelle nachträglich wieder verschlossen werden muss. Die nachträglich verschlossenen Bohrungsansätze stellen während des Betriebs mögliche Schwachstellen dar.

Wenn zwei oder mehr Magnetventile in einer Steuereinheit verwendet werden, ist die Herstellung der Verbindungskanäle komplexer. Beispielsweise sind dann weitere Verbindungskanäle in komplexer Ausbildung notwendig, die nicht mit den Pneumatikanschlüssen zusammenfallen, und daher weitere Einbohrstellen aufweisen, die nachträglich wieder verschlossen werden müssen.

Die pneumatische Funktion der Steuereinheit ist eng an das Gehäuse-Design gebunden. Funktionelle Erweiterungen sind damit nicht ohne weiteres möglich. Bei neuen Konstruktionsvarianten von Steuereinheiten werden damit auch neue und teure Spritzguss-Formen notwendig. Daraus resultiert, dass die Herstellung der Verbindungskanäle nicht auf verschiedene Baureihen von Steuereinheiten und auf individuelle Kundenanforderungen übertragbar ist.

Aufgabe der Erfindung ist es, eine Steuereinheit bereitzustellen, durch die keine zusätzlichen Bohrungen von außen eingebracht werden müssen. Die Steuereinheit soll bedarfsgerecht ausgebildet werden können. Die Steuereinheit soll Verbindungskanäle zur Verbindung externer und interner Anschlüsse umfassen. Die Steuereinheit soll kompakt und platzsparend ausgebildet werden können. Darüber hinaus soll die Steuereinheit den Anforderungen des dauerhaften Betriebes gerecht werden und dabei äußerst langlebige Eigenschaften bewahren. Die Steuereinheit soll auf möglichst preiswerte sowie besonders einfache Weise und mit einem möglichst geringen Materialausschuss hergestellt werden können.

Diese Aufgabe wird erfindungsgemäß durch eine Steuereinheit für einen pneumatischen Stellantrieb eines Membranventils gemäß den Merkmalen des Anspruchs 1 sowie einem Verfahren und einer Verwendung gemäß den nebengeordneten Hauptansprüchen gelöst. Bevorzugte Varianten sind den Unteransprüchen, der Beschreibung und den Figuren zu entnehmen.

Gemäß der Erfindung weist die Steuereinheit ein Modul auf, welches Kanäle zur Verbindung der Anschlüsse umfasst.

Ein Modul ist ein eigenständiger und in sich geschlossener Baustein bzw. eine Komponente, die Teil eines größeren Systems bzw. einer Struktur ist. Ein Modul kann beispielsweise komplexe Aufgaben in kleinere Anwendungen unterteilen und die Ausführung realisieren.

Ein Modul kann beispielsweise eine innere Kohäsion aufweisen. Dabei sind die in einem Modul enthaltenen Funktionen bzw. Elemente eng miteinander verknüpft. Das Modul ist im Gehäusebauteil angeordnet und interagiert mit mindestens einem Magnetventile und mittelbar mit dem Stellorgan.

Dabei bietet das Modul eine Option, standardisierte Steuereinheiten an Kundenspezifikationen anzupassen. Dazu können in dem kompakten Modul die Anzahl der Kanäle und der Anschlüsse sowie deren Anordnung variiert werden, wodurch eine standardisierte Steuereinheit eine erweiterte Funktionalität erzielen kann.

Ein Kanal ist ein begrenzter Raum, der mindestens über einen Einlass bzw. Eingang und mindestens über einen Auslass bzw. Ausgang verfügt. Bei einem durchströmbaren Kanal kann ein Medium zwischen dem Einlass und dem Auslass strömen bzw. gefördert werden.

Ein Kanal im Zusammenhang mit einem pneumatischen Antrieb bezieht sich auf einen durchströmbaren, abgegrenzten Raum, der beispielsweise zur Steuerung und zur Übertragung von Druckluft in einem pneumatischen System verwendet wird.

Ein Kanal bzw. ein Luftkanal ist eine Leitung, die dazu dient, Druckluft von einer Druckluftquelle, wie beispielsweise einem Kompressor, zu einem pneumatischen Antriebselement zu transportieren. Pneumatische Antriebe nutzen komprimierte Luft, um beispielsweise Ventile, Stellantriebe, Zylinder oder andere bewegliche Teile zu betätigen.

Das Modul und die Kanäle in einem Modul können die Druckluft auf verschiedene Anschlüsse aufteilen. Dadurch kann das definierte Öffnen oder das definierte Schließen von Ventilen realisiert werden.

Die Bereitstellung der Druckluft für die Steuereinheit erfolgt beispielsweise über sichtbare, externe Anschlüsse auf dem Gehäusebauteil. Dazu können Verbindungselemente mit Außengewinde mit einem Abdichtungselement in das Innengewinde der externen Anschlüsse eingebracht werden.

Der pneumatische Antrieb eines Ventils weist mindestens einen Versorgungsanschluss, einen Arbeitsanschluss und einen Entlüftungsanschluss auf. Je nach Ausführungsvariante des Ventils bzw. des pneumatischen Antriebs kann mindestens ein weiterer Arbeitsanschluss vorgesehen sein.

Der Versorgungsanschluss ist der Anschluss, durch den die Druckluft in den pneumatischen Antrieb eintritt. Der Arbeitsanschluss ist der Anschluss, durch den die Druckluft für den Öffnungs- bzw. Schließvorgang strömt. Ein Entlüftungsanschluss ist der Anschluss, aus dem die Druckluft aus dem Ventilgehäuse entweichen kann.

Die spezifische Anordnung und Gestaltung dieser Anschlüsse ist abhängig von der Art des Ventils und den Anforderungen der Anwendung. Die Anschlüsse dienen dazu, das Ventil in das Gesamtsystem zu integrieren und die gewünschte Funktionalität zu gewährleisten.

Die internen Kanäle stellen die Verbindung der externen Kanäle mit den Anschlüssen der Magnetventile dar. In der Regel besitzt jedes Magnetventil einen Versorgungs-, einen Arbeits- und einen Entlüftungsanschluss.

Bei einer Steuereinheit mit mehr als einem Magnetventil kann die Versorgung mit Druckluft durch den externen Versorgungsanschluss über intern in dem Modul verlaufende Kanäle zwischen den Magnetventilen realisiert werden.

Mindestens ein Magnetventil steht mit dem pneumatischen Antrieb des Membranventils in Verbindung. Bei einer Ausführungsvariante ist der Arbeitsanschluss unterhalb des Antriebskolbens mit einem Luftraum verbunden, während oberhalb ein Federraum angeordnet ist. Dabei gibt das Magnetventil die Druckluft in den Luftraum frei, um den Antrieb des Membranventils nach oben zu bewegen. Wird die Druckluft über den Entlüftungsanschluss abgelassen, so schließt das Ventil durch die Krafteinwirkung der Feder.

Soll ein definierter Druck für den pneumatischen Antrieb realisiert werden, so kann dies über eine Schaltung von zwei Magnetventilen erfolgen. Dabei wird über das erste Magnetventil die Belüftung des pneumatischen Antriebs realisiert, während über das zweite Magnetventil ein Gegendruck im zweiten Luftraum aufgebaut wird, um definierte Ventilstellungen anzusteuern.

Bei einer Variante der Erfindung kann die Steuereinheit einen vierten externen Anschluss in der Ausführung als weiteren Arbeitsanschluss aufweisen. Bei dieser Ausführungsvariante kann je ein Druckluftraum des pneumatischen Antriebs auf jeder Kolbenseite mit Druckluft bedient werden.

Beispielsweise ist das Modul plattenartig ausgebildet.

Die Bezeichnung plattenartig bezieht sich auf eine Struktur oder eine Form, die Ähnlichkeiten mit einer flachen, dünnen Platte aufweist. Dabei weist ein plattenartiges Modul eine ausgeprägte Breite und Länge im Vergleich zu seiner Höhe auf. Plattenartige Strukturen weisen typischerweise eine Ausdehnung in zwei Dimensionen auf, wobei ihre Höhe im Vergleich zu ihrer Breite und Länge relativ gering ausgebildet ist.

Dabei weist das plattenartige Modul eine Geometrie auf, die u-förmig oder t-förmig oder I-förmig ausgebildet ist, oder die Form eines Boomerangs bzw. einer Sichel hat.

Bei einer Variante der Erfindung beträgt die Höhe bzw. in Abhängigkeit der Betrachtungsweise die Dicke des Moduls mehr als 1 %, vorzugsweise mehr als 2 %, insbesondere mehr als 3 %, und/oder weniger als 15 %, vorzugsweise weniger als 10 %, insbesondere weniger als 5 %, der Höhe des Gehäusebauteils.

Beispielhaft kann die Höhe des Moduls im Bereich von 1 - 8 mm liegen.

Beispielsweise beträgt die Höhe des Moduls 3 mm. Dadurch ist das Modul deutlich platzsparender ausgebildet als bisher bekannte Formen von Modulen, die Kanäle zur Verbindung aufweisen.

Die Höhe eines Gehäusebauteils bezieht sich auf die vertikale Ausdehnung bzw. auf den Abstand zwischen der Oberseite und der Unterseite des Gehäusebauteils der Steuereinheit. Die Höhe kann die Platzierung und Integration der Steuereinheit in verfahrenstechnische Anlage beeinflussen.

Bei einer Variante der Erfindung beträgt die Gesamthöhe der Steuereinheit in der Ausführung Gehäuseoberteil und Gehäusebauteil 53 mm. Dabei nimmt das Gehäuseoberteil circa 30 % der Höhe ein. Hier sind beispielsweise eine Statusanzeige und eine Stellungsanzeige in der Ausführungsvariante mit LEDs inklusive einem Magnetsensor realisiert. Im Gehäuseunterteil bzw. Gehäusebauteil, welches circa 70 % der Höhe einnimmt, sind die pneumatischen Anschlüsse (externen Druckluftanschlüsse: Versorgungs-, Arbeits- und Entlüftungsanschluss), sowie die internen Anschlüsse der Magnetventile, sowie die Magnetventile inklusive der nötigen gebohrten Luftkanäle verbaut.

Bedingt durch die unterschiedlichen Ausführungsvarianten des plattenartigen Moduls und damit verbunden der freien Gestaltung der Kanäle, ist die räumliche Anordnung der Magnetventile innerhalb der Steuereinheit von den externen Anschlüssen entkoppelt. Dadurch kann eine kompakte Bauart des Gehäusebauteils und der Steuereinheit realisiert werden.

Vorzugsweise weist das Modul eine flächige Erstreckung auf, wobei die flächige Erstreckung mehr als 10 %, vorzugsweise mehr als 20 %, insbesondere mehr als 30 %, und/oder weniger als 80 %, vorzugsweise weniger als 70 %, insbesondere weniger als 60 %, der Querschnittsfläche des Gehäusebauteils beträgt.

Die Erstreckung des Moduls in horizontaler Richtung beträgt bei einem Durchmesser von 48 mm des Gehäusebauteils der Steuereinheit beispielsweise circa 500 mm².

Durch die beschriebene Entkopplung der Lage von externen und internen Anschlüssen und einer vorteilhaften flachen Ausführung des Moduls werden neue Anordnungsmöglichkeiten innerhalb der Steuereinheit ermöglicht.

Bisher wurden bekannte Kanäle ausschließlich konventionell gefertigt. Dadurch ergaben sich zwangsläufig kreisrunde und geradlinige gebohrte Kanäle. Die Verbindungskanäle der externen Druckluftanschlüsse mit Anschlüssen der Magnetventile werden in der Regel von außen in einen Bereich der Steuereinheit, die aus Vollmaterial ausgebildet ist, gebohrt. Die nachträglich wieder verschlossenen Einbohrstellen stellen während des Betriebs mögliche Schwachstellen dar.

Erfindungsgemäß umfasst das Modul Kanäle, welche mithilfe generativer Fertigung in das Modul integriert, ausgebildet sind. Generatives Fertigen, auch als Additive Fertigung bekannt, ist eine Technologie zur Herstellung von dreidimensionalen Objekten durch schichtweises Auftragen oder Aushärten von Materialien. Im Gegensatz zu traditionellen subtraktiven Fertigungsmethoden, bei denen Material entfernt wird, wird beim generativen Fertigen Material schichtweise hinzugefügt, um das gewünschte Endprodukt zu erzeugen.

Durch die generative Fertigung wird die Herstellung komplexer Geometrien und Strukturen, die mit herkömmlichen Methoden schwer oder unmöglich herzustellen sind, möglich. So werden geschwungene Luftkanäle realisierbar, sowie die Kopplung der Platzierung des Magnetventils und der externen Anschlüsse.

Das Modul aus einem Multimaterial ausgebildet ist. = eines deutlich weicher, damit es zur Verwendung als Dichtung

Bei einer Variante mit einem Magnetventil ist durch die Entkopplung der Platzierung des Magnetventils von den Anschlüssen eine räumliche Flexibilität in der Anordnung gegeben, wodurch eine kompakte Ausführung des Gehäusebauteils ermöglicht wird. Das generative Fertigen ermöglicht die Herstellung von individualisierten, kundenspezifischen Produkten.

Bei mehreren angeordneten Magnetventilen müssen bei konventionellen Fertigungsverfahren zusätzliche ausschließlich gerade Bohrungen durch das Gehäusebauteil erfolgen, um die Luftkanäle der Magnetventile miteinander zu verbinden. Diese Bohrungen müssen, sofern Sie nicht der Versorgungsanschluss, Arbeitsanschluss oder Entlüftungsanschluss sind, im Nachgang verschlossen werden.

Beispielsweise sind die Kanäle nicht ausschließlich geradlinig ausgebildet.

Insbesondere bei nicht gradlinig ausgebildeten Kanälen, beispielsweise bei integrierten gebogenen Kanalabschnitten, weisen die Kanäle die kürzeste Verbindung zwischen zwei Anschlüssen auf, bei gleichzeitig sehr dünn ausgebildetem Modul.

Bei einer Ausführung der Erfindung weisen die Kanäle eine runde und/oder kreisförmige und/oder rechteckige und/oder polygone und/oder hexagonale und/oder trapezförmige und/oder dreieckige und/oder tropfenförmige Querschnittsform auf.

Mithilfe des generativen Herstellungsverfahrens können insbesondere vorteilhafte tropfenförmige Querschnittsformen der Kanäle realisiert werden.

Beispielsweise kann der Kanal über die Kanallänge aus unterschiedliche Querschnittsformen aufweisen. Insbesondere bei einer sehr dünnen Ausführung des Moduls kann die Querschnittsform eines Kanals zur Implementierung der verschiedenen Anschlüsse im Modul platzsparend variiert werden.

Eine polygonale Ausführung der Querschnittsfläche kann in verschiedenen Anwendungen unterschiedliche Vorteile bieten. So können polygonale Formen in einer Vielzahl von Seitenanzahlen gestaltet werden, was es ermöglicht, die Form an die spezifischen Anforderungen und Gegebenheiten anzupassen. In Anwendungen, in denen Platz eine begrenzende Ressource ist, kann eine polygonale Form eine kompakte Gestaltung ermöglichen, um den verfügbaren Raum optimal zu nutzen. So kann, je nach Geometrie, der verfügbare Raum effizienter ausgenutzt und somit eine größere Querschnittsfläche erzielt werden.

In einer besonders vorteilhaften Variante weisen die Luftkanäle eine kreisrunde Querschnittsfläche auf.

Die runde Form ermöglicht eine gleichmäßige Verteilung von Belastungen und Spannungen entlang der Struktur. Dadurch kann eine hohe strukturelle Integrität erreicht werden. Zudem ermöglicht die runde Form eine reibungsfreiere Strömung und minimiert Verwirbelungen. Die kreisrunde Querschnittform korrespondiert zu den Dichtungssitzen der Magnetventile.

Beispielsweise weisen die Kanäle einen Durchmesser auf, wobei der Durchmesser mehr als 50 %, vorzugsweise mehr als 60 %, insbesondere mehr als 70 %, und/oder weniger als 90 %, vorzugsweise weniger als 85 %, insbesondere weniger als 80 %, der Höhe bzw. in Abhängigkeit der Betrachtungsweise auch Dicke des Moduls beträgt. Die generative Fertigung des Moduls ermöglicht ein besonders flaches Modul, wobei die Kanäle darin besonders voluminös, insbesondere mit einem großen Durchmesser, ausgebildet werden können.

Beispielsweise beträgt der Durchmesser bzw. bei nicht runden Querschnitten ein Äquivalentdurchmesser 1,5 mm bei einer Modulhöhe von 3 mm.

Bei einer Variante der Erfindung weist das Modul mindestens einen Sitz für ein Abdichtungselement auf.

Bei einer Variante der Erfindung weist das Magnetventil und/oder das Gehäuse und/oder das Modul mindestens einen Sitz für ein Abdichtungselement auf. Zur Abdichtung des Magnetventils zum Gehäusebauteil und/oder zum Modul kann in das Gehäuseunterteil und/oder in das Modul mindestens ein O - Ringsitz eingearbeitet sein.

Das Abdichtungselement kann beispielsweise in Form eines O-Rings ausgeführt sein. So kann beispielsweise die Passstelle zwischen Magnetventil und Kanal vorteilhaft und dauerhaft abgedichtet werden.

Bei einer Variante der Erfindung kann das Abdichtungselement beim generativen Herstellungsprozess des Moduls zeitgleich in einem Arbeitsgang mit ausgebildet werden.

Beispielsweise kann das Abdichtungselement durch einen Multimaterialdruck ausgebildet werden. Auf diese vorteilhafte Weise können das Modul und das Abdichtungselement zeitgleich und ineinander erzeugt werden.

Beispielsweise wird für jeden Kanal mindestens ein Sitz für ein Abdichtungselement in das Modul eingebracht.

Bei einer Variante der Erfindung weisen die Kanäle des Moduls eine Verbindung von Anschlüssen eines ersten Magnetventils mit Anschlüssen mindestens eines zweiten Magnetventils auf.

So können in einer Variante über einen innenliegenden Kanal die Versorgungsanschlüsse eines ersten Magnetventils mit einem weiteren Magnetventil verbunden werden. Dadurch wird zur Versorgung der beiden Magnetventile mit Druckluft lediglich eine Bohrung im Gehäuse notwendig, um beide Magnetventile zu versorgen. Das zweite Magnetventil wird über die Luftkanäle des Moduls mit Druckluft versorgt.

In einer weiteren Variante der Erfindung werden durch zwei Luftkanäle im Modul die Versorgungs- sowie die Entlüftungsanschlüsse der beiden Magnetventile verbunden. Das zweite Magnetventil wird über die internen Luftkanäle des Moduls mit Druckluft versorgt bzw. entlüftet. Für die Versorgung mit Druckluft und die Entlüftung sind in dieser Variante lediglich zwei Bohrungen notwendig.

Zusätzlich zu den bereits beschriebenen Beispielen mit einem und zwei Magnetventilen gibt es die Ausführungsvariante mit drei Magnetventilen sowie auch eine Ausführung als Stellungsregler.

In der Variante als Stellungsregler soll der Druck aus der Versorgungsleitung an den Antrieb nicht lediglich weitergegeben, sondern stufenlos geregelt werden. Im pneumatischen Antrieb befindet sich oberhalb des Kolbens der Federraum und unterhalb des Kolbens der Luftraum. In dieser Ausführungsvariante sind zwei Magnetventile verbaut. Ein erstes Magnetventil schaltet und belüftet den Antrieb, bis der gewünschte Druck erreicht wird. Ist dieser Druck erreicht, wird dieses geschlossen, sodass der Druck gehalten wird. Zum Schließen wird ein zweites Magnetventil geöffnet, sodass die Luft aus dem Antrieb abgelassen werden kann. Auf Seiten der Magnetventile sind nur jeweils zwei Anschlüsse geöffnet. Das erste Magnetventil weist einen Versorgungsanschluss und einen Arbeitsanschluss auf. Das zweite Magnetventil verfügt über einen Arbeitsanschluss, sowie einen Entlüftungsanschluss. Der Versorgungsanschluss des ersten Magnetventils wird über einen innenliegenden Kanal mit dem weiteren Magnetventil verbunden. Die Entlüftung des zweiten Magnetventils erfolgt über den Entlüftungsanschluss des ersten Magnetventils.

Beispielsweise ist das Modul als einstückige Struktur ausgebildet.

Im Fall eines generativen Fertigungsprozesses, wie beispielsweise dem selektiven Laserschmelzen oder dem Fused Layer Modeling, wird das Modul schichtweise aufgebaut. Hierbei wird das Modul als eine einzige Struktur gedruckt. Die Räume um die Kanäle des Moduls sind somit bereits während des "Druckprozesses" miteinander verbunden und bilden eine einstückige Struktur.

Eine einstückige Struktur bezieht sich auf ein Bauteil bzw. ein Modul, das aus einem einzigen, ununterbrochenen Stück Material gefertigt ist, ohne dass separate Teile oder Komponenten zusammengefügt werden müssen. Es handelt sich um eine Struktur, bei der alle Teile oder Elemente in einer einzigen, durchgehenden Form integriert sind.

Beispielsweise wird durch die besondere Gestaltung des Moduls eine Ausführung der Steuereinheit in einer kompakten Ausgestaltung möglich.

Gemäß der Erfindung wird die Herstellung des Moduls als einstückige Struktur durch selektives Einwirken von energetischer Strahlung auf schichtweise aufgetragene Pulverschichten erzeugt.

Das selektive Laserschmelzen (Selective Laser Melting, SLM) ist ein additives Fertigungsverfahren, das zur Herstellung des plattenartigen Moduls in der Ausführung als einstückige Struktur aus metallischem Pulver und/oder aus pulverförmigem Verbundwerkstoff eingesetzt wird. Es handelt sich um eine Form des 3D-Drucks, bei dem ein Hochleistungslaser verwendet wird, um das Pulver selektiv zu schmelzen und Schicht für Schicht des Moduls mit seinen individuell verlaufenden Luftkanäle aufzubauen.

Das plattenartige Modul wird schichtweise aufgebaut, indem eine dünne Schicht des Pulvers auf einer Bauplattform aufgetragen wird. Der Laserstrahl wird dann auf die ausgewählten Bereiche gerichtet, wo er das metallische Pulver und/oder den pulverförmigen Verbundwerkstoff schmilzt und zu einer festen Schicht verbindet. Anschließend wird eine neue Schicht aufgetragen und der Vorgang wird wiederholt, bis das plattenartige Modul erstellt ist.

Vorzugsweise wird ein Hochleistungslaser, typischerweise ein Faserlaser oder ein CO₂-Laser, verwendet. Der Laserstrahl wird präzise gesteuert, um das Metallpulver zu schmelzen und zu verschmelzen. Die Laserparameter wie Leistung, Intensität und Geschwindigkeit werden entsprechend den Anforderungen des Prozesses und des gewählten pulverförmigen Werkstoffs eingestellt. Beispielsweise können die Laserparameter auch partiell angepasst werden, um definierte und erwünschte Gefügestrukturen zu realisieren.

Nach dem Laserschmelzen kann das plattenartige Modul eventuell nach Bedarf nachbearbeitet werden, um beispielsweise plane Flächen des Vorsprungs zu erzielen.

Gemäß der Erfindung wird eine Steuereinheit für einen pneumatischen Stellantrieb eines Membranventils verwendet, um den Durchfluss von Flüssigkeiten oder Gasen in industriellen Prozessen zu steuern. Pneumatische Stellantriebe ermöglichen eine präzise automatisierte Steuerung von Membranventilen, wodurch menschliche Eingriffe minimiert werden können. Dies ist in Anlagen wichtig, die eine hohe Genauigkeit und Konsistenz erfordern, wie beispielsweise in chemischen sowie pharmazeutischen Anlagen.

Weitere Merkmale und Vorteile der Erfindung ergeben sich aus der Beschreibung von Ausführungsbeispielen anhand von Zeichnungen und aus den Zeichnungen selbst.

Dabei zeigt:
- Fig. 1: eine Schnittdarstellung eines Membranventils,
- Fig. 2: eine Darstellung eines Ventilsteuerkopfes,
- Fig. 3: eine Schnittdarstellung des unteren Gehäusebauteils,
- Fig. 4: eine Draufsicht auf das untere Gehäusebauteil (ohne die verbauten Magnetventile).

**Bezugszeichenliste**

| | | | |
|---|---|---|---|
| 1 | Membranventil | 15 | Weitsicht LED |
| 2 | Gehäuse | 16 | Platine |
| 3 | Anschluss | 17 | Erstes Magnetventil |
| 4 | Anschluss | 18 | Versorgungsanschluss |
| 5 | Wehr | 19 | Arbeitsanschluss |
| 6 | Membran | 20 | Entlüftungsanschluss |
| 7 | Haube | 21 | Verbindungsstück |
| 8 | Schraube | 22 | Modul |
| 9 | Kolbenstange | 23 | Kanal |
| 10 | Druckstück | 24 | Befestigungsschrauben |
| 11 | Zylinder | 25 | Arbeitsanschluss erste Kolbenseite |
| 12 | Oberes Gehäusebauteil | 26 | Versorgungsanschluss Magnetventil |
| 13 | Gehäusebauteil | 27 | Arbeitsanschluss zweite Kolbenseite |
| 14 | Transp. Gehäusewand | 28 | Steuereinheit |
| | | 29 | Versorgungsanschluss Magnetventil |
| | | 30 | Entlüftungsanschluss Magnetventil |
| | | 31 | Zweites Magnetventil |

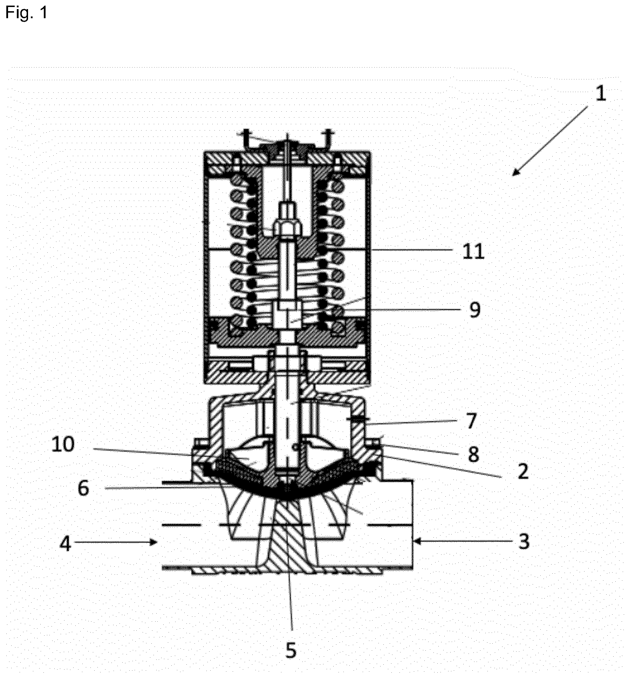

Das in Fig. 1 dargestellte Membranventil 1 besitzt ein Gehäuse 2, welches Anschlüsse 3, 4 und ein Wehr 5 umfasst. Das Wehr 5 dient als Sitzfläche für die Membran 6. Die Membran 6 ist mithilfe von Schrauben 8 zwischen dem Gehäuse 2 und einer Haube 7 eingespannt. In der Haube 7 sind die zur Betätigung der Membran 6 notwendigen Elemente integriert, die im Ausführungsbeispiel als pneumatischer Federantrieb mit einer Kolbenstange 9 ausgeführt sind. An der Kolbenstange 9 ist ein Druckstück 10 befestigt. Das Druckstück 10 ist verschieblich in der Haube 7 angeordnet und wird von einer inneren Wand, im darüberliegenden Zylinder 11 geführt. Durch Betätigung des Antriebs wird über die Kolbenstange 9 eine vertikale Verschiebung des Druckstücks 10 bewirkt, sodass sich die Membran 6 verformt und der freie Querschnitt zwischen dem Wehr und der Membran 6 vergrößert bzw. verkleinert.

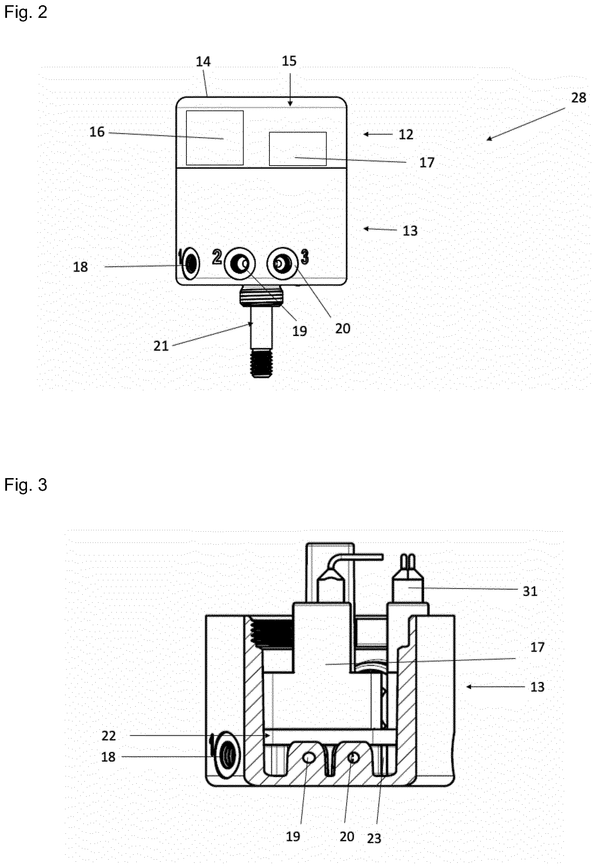

Die in Fig. 2 abgebildete Steuereinheit 28 setzt sich aus einem oberen Gehäusebauteil 12, einem Gehäusebauteil 13 und einem Verbindungsstück 21 zusammen. Das obere Gehäusebauteil 12 dient unter anderem der optischen Stellungsrückmeldung des Ventils und weist eine transparente Gehäusewand 14 in Form einer Haube auf, wodurch die Sichtbarkeit von LEDs 15 erzielt wird. Des Weiteren ist die Platine 16 im oberen Gehäusebauteil 12 angeordnet. Teilweise ragt das Magnetventil 17 in das obere Gehäusebauteil 12 hinein. Im unteren Gehäusebauteil 13 sind der Versorgungsanschluss 18, der Arbeitsanschluss 19 und der Entlüftungsanschluss 20 verbaut.

In Fig. 3 ist eine Ausführungsvariante mit zwei Magnetventilen 17, 31 für einen doppelwirkenden Pneumatikantrieb dargestellt. Auf der unteren Seite des Gehäusebauteils 13 ist ein plattenartiges Modul 22 aufgeschraubt, in welchem die additiv gefertigten Kanäle 23 verlaufen. Mittels der Kanäle 23 wird die Verbindung des externen Versorgungsanschlusses 18, des Arbeitsanschlusses 19, des Entlüftungsanschlusses 20 sowie der internen Anschlüsse zur Steuerung des Membranventils 1 realisiert.

Das Modul 22 ist besonders flach und platzsparend ausgebildet. Die Kanäle 23 verlaufen gebogen und nicht geradlinig und sind mit einem runden Querschnitt ausgebildet.

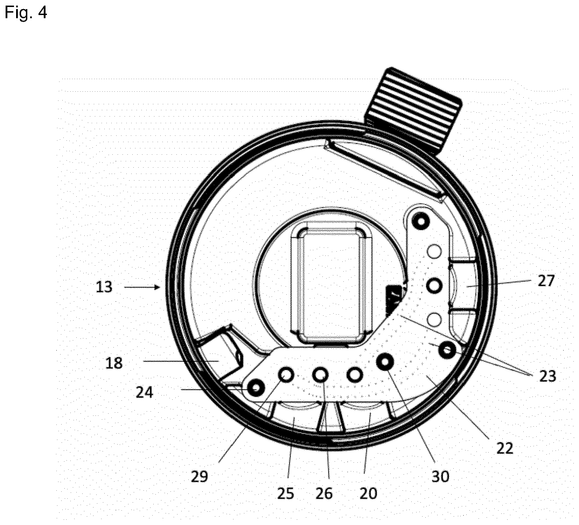

Fig. 4 zeigt eine schematische Draufsicht des unteren Gehäuseunterteils 13 aus Fig. 3. Beide Magnetventile 17 besitzen einen Versorgungsanschluss 29, einen Arbeitsanschluss 26, 27 sowie einen Entlüftungsanschluss 30. Das plattenartige Modul 22 ist durch Befestigungsschrauben 24 auf dem Boden des unteren Gehäusebauteils 13 montiert. In dieser Variante wird das zweite Magnetventil 17 durch den Kanal 23 des Moduls 22 mit dem externen Versorgungsanschluss 18 und dem Entlüftungsanschluss 20 verbunden.

In der dargestellten Ausführungsvariante ist keine Rückstellfeder vorgesehen. Der Arbeitsanschluss der ersten Kolbenseite 25 des Magnetventils 17 dient zur Belüftung, wohingegen der Arbeitsanschluss der zweiten Kolbenseite 27 zum Entlüften dient.

## Patentansprüche

1. Steuereinheit (28) für einen pneumatischen Stellantrieb eines Membranventils (1), wobei die Steuereinheit (28) ein Gehäusebauteil (13) umfasst, das einen Versorgungsanschluss (18), mindestens einen Arbeitsanschluss (19, 25, 27) und einen Entlüftungsanschluss (20) aufweist, und in dem Gehäusebauteil (13) mindestens ein Magnetventil (17, 31) angeordnet ist, wobei jedes Magnetventil (17, 31) Kombinationen folgender Anschlüsse umfasst:
- einen Arbeitsanschluss (26),
- einen Entlüftungsanschluss (30),
- einen Versorgungsanschluss (29),
wobei die Anschlüsse (18, 19, 20, 25, 27) des Gehäusebauteils (13) mit den Anschlüssen (26, 29, 30) mindestens eines Magnetventils (17, 31) in Verbindung stehen,
**dadurch gekennzeichnet, dass** die Steuereinheit (28) ein Modul (22) aufweist, welches Kanäle (23) zur Verbindung der Anschlüsse (18, 19, 20, 25, 26, 27, 29, 30) umfasst.

2. Steuereinheit nach Anspruch 1, **dadurch gekennzeichnet, dass** das Modul (22) plattenartig ausgebildet ist.

3. Steuereinheit nach Anspruch 1 oder 2, **dadurch gekennzeichnet, dass** Modul aus einem Multimaterial ausgebildet ist.

4. Steuereinheit nach einem der Ansprüche 1 bis 3, **dadurch gekennzeichnet, dass** das Modul (22) eine Höhe aufweist, wobei die Höhe mehr als 1 %, vorzugsweise mehr als 2 %, insbesondere mehr als 3 %, und/oder weniger als 15 %, vorzugsweise weniger als 10 %, insbesondere weniger als 5 %, der Höhe des Gehäusebauteils (13) beträgt.

5. Steuereinheit nach einem der Ansprüche 1 bis 4, **dadurch gekennzeichnet, dass** das Modul (22) eine flächige Erstreckung aufweist, wobei die flächige Erstreckung mehr als 10 %, vorzugsweise mehr als 20 %, insbesondere mehr als 30 %, und/oder weniger als 80 %, vorzugsweise weniger als 70 %, insbesondere weniger als 60 %, der Querschnittsfläche des Gehäusebauteils (13) beträgt.

6. Steuereinheit nach einem der Ansprüche 1 bis 5, **dadurch gekennzeichnet, dass** die Kanäle (23) nicht ausschließlich geradlinig ausgebildet sind.

7. Steuereinheit nach einem der Ansprüche 1 bis 6, **dadurch gekennzeichnet, dass** die Kanäle (23) eine runde und/oder kreisförmige und/oder rechteckige und/oder polygone und/oder hexagonale und/oder trapezförmige und/oder dreieckige und/oder tropfenförmige Querschnittsform aufweisen.

8. Steuereinheit nach einem der Ansprüche 4 bis 6, **dadurch gekennzeichnet, dass** die Kanäle (23) einen Durchmesser aufweisen, wobei der Durchmesser mehr als 50 %, vorzugsweise mehr als 60 %, insbesondere mehr als 70 %, und/oder weniger als 90 %, vorzugsweise weniger als 85 %, insbesondere weniger als 80 %, der Höhe des Moduls (22) beträgt.

9. Steuereinheit nach einem der Ansprüche 1 bis 8, **dadurch gekennzeichnet, dass** die Kanäle (23) mithilfe generativer Fertigung in das Modul (22) integriert ausgebildet sind.

10. Steuereinheit nach einem der Ansprüche 1 bis 9, **dadurch gekennzeichnet, dass** das Magnetventil und/oder das Gehäuse und/oder das Modul (22) mindestens einen Sitz für ein Abdichtungselement aufweist.

11. Steuereinheit nach einem der Ansprüche 1 bis 10, **dadurch gekennzeichnet, dass** die Kanäle (23) des Moduls (22) Anschlüsse eines ersten Magnetventils (17) mit Anschlüssen mindestens eines zweiten Magnetventils (31) verbinden.

12. Steuereinheit (28) nach einem der Ansprüche 1 bis 11, **dadurch gekennzeichnet, dass** das Modul (22) als einstückige Struktur ausgebildet ist.

13. Verfahren zur Herstellung eines Moduls (22) für eine Steuereinheit (28), **dadurch gekennzeichnet, dass** das Modul (22) als einstückige Struktur durch selektives Einwirken von energetischer Strahlung auf schichtweise aufgetragene Pulverschichten erzeugt wird.

14. Verwendung eines Moduls (22) in einer Steuereinheit (28) als Verbindung von Anschlüssen zur Steuerung mindestens eines Magnetventils (17).
